(19) Europäisches Patentamt / European Patent Office / Office européen des brevets

(11) **EP 3 708 617 B1**

(12) **EUROPEAN PATENT SPECIFICATION**

(45) Date of publication and mention
of the grant of the patent:
**29.01.2025 Bulletin 2025/05**

(21) Application number: **20159042.9**

(22) Date of filing: **24.02.2020**

(51) International Patent Classification (IPC):
*C09D 5/00* (2006.01)      *C09D 5/16* (2006.01)
*C09D 7/62* (2018.01)      *C09D 7/80* (2018.01)

(52) Cooperative Patent Classification (CPC):
**C09D 7/62; C09D 5/00; C09D 5/1681; C09D 7/80**

(54) **COMPOSITION AND METHOD FOR PREPARATION OF HYDROPHOBIC COATING**

ZUSAMMENSETZUNG UND VERFAHREN ZUR HERSTELLUNG EINER HYDROPHOBEN
BESCHICHTUNG

COMPOSITION ET PROCÉDÉ DE PRÉPARATION D'UN REVÊTEMENT HYDROPHOBE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2019 IN 201921010010**

(43) Date of publication of application:
**16.09.2020 Bulletin 2020/38**

(73) Proprietor: **Tata Consultancy Services Limited
Maharashtra (IN)**

(72) Inventors:
• **Daware, Santosh Vasant**
**411013 Pune - Maharashtra (IN)**
• **Rai, Beena**
**411013 Pune - Maharashtra (IN)**

(74) Representative: **Goddar, Heinz J.
Boehmert & Boehmert
Anwaltspartnerschaft mbB
Pettenkoferstrasse 22
80336 München (DE)**

(56) References cited:
CN-A- 105 602 297        CN-A- 107 916 069
CN-A- 108 117 276        CN-A- 108 298 558
CN-A- 108 659 581        DE-A1- 102009 014 164
KR-A- 20100 127 004

• CHASTEK T T ET AL: "Hexadecyl-functionalized lamellar mesostructured silicates and aluminosilicates designed for polymer-clay nanocomposites. Part II: Dispersion in organic solvents and in polystyrene", POLYMER, ELSEVIER SCIENCE PUBLISHERS B.V, GB, vol. 46, no. 12, 26 May 2005 (2005-05-26), pages 4431 - 4439, XP027727558, ISSN: 0032-3861, [retrieved on 20050526]
• CHASTEK T T ET AL: "Hexadecyl-functionalized lamellar mesostructured silicates and aluminosilicates designed for polymer-clay nanocomposites. Part I. Clay synthesis and structure", POLYMER, ELSEVIER SCIENCE PUBLISHERS B.V, GB, vol. 46, no. 12, 26 May 2005 (2005-05-26), pages 4421 - 4430, XP027727557, ISSN: 0032-3861, [retrieved on 20050526]

**Description**

CROSS-REFERENCE TO RELATED APPLICATIONS AND PRIORITY

This patent application claims priority to India Patent Application 201921010010, filed on March 14, 2019.

TECHNICAL FIELD

The present subject matter relates, in general, hydrophobic coating, and, in particular, composition and method for preparation of hydrophobic coating.

BACKGROUND

In general, several nano composite based coating formulations are developed. However, there are no standardized synthesis procedure for developing the coating formulation. As a result the coating formulations are often unstable and the coatings produced by conventional procedures are not durable. For example, coating formulation such as hydrophobic coatings may be developed from many different materials like Manganese oxide polystyrene ($MnO_2$/PS), nano-composite Zinc oxide polystyrene (ZnO/PS), nano-composite Precipitated calcium carbonate, Carbon nano-tube structures, silica nano-coating, Fluorinated silanes and Fluor polymer coatings and the like. Out of these materials, silica-based coatings are most cost effective to use, since they are gel-based and can be easily applied either by dipping substrate to be coated into the gel or via aerosol spray. Therefore, the silica-based gels remain the most economically viable option in the state of the art.

Also, the current state of the art silica-based coating formulations are hindered in terms of weak durability thereby making it unsuitable for most of the applications. The applications include, but not limited to coating on buildings, solar panels, automobiles, household appliances which may need no frequent cleaning. Some of the recently developed coatings on surface textures such as stainless steel are extremely durable and permanently hydrophobic. Even though, optically these surfaces appear as a uniform matter surface but microscopically they consist of rounded depressions of 1-2 microns deep over 25% to 50% of the coated surface. Hence there is a need for developing a standardized procedure for preparing coating formulations to overcome the drawbacks of the state of the art methods.

CN 108 659 581A disclose methods for preparing super abrasive nano-titanium porcelain coating, are as follows: Nano silicon dioxide, nano-titanium oxide are carried out silicic acid anhydride with silane under catalysts conditions, obtain a nanometer titanium porcelain resin by step 1; Step 2 will be added titanium alloy fiber, filler and pigment and disperse in high speed dispersor, you can obtain finished product in nanometer titanium porcelain resin. Its main film forming matter of super abrasive nano-titanium porcelain coating and binder prepared by the present invention is nanometer titanium porcelain resin, the main component of nanometer titanium porcelain resin is nano silicon dioxide, titanium dioxide, have the characteristics that super abrasive, high rigidity, antifouling, fire prevention, waterproof, ageing-resistant, antibacterial, is particularly suitable for public building inner-outer wall and ground.

CHASTEKTT ET AL: "Hexadecyl-functionalized lamellar mesostructured silicates and aluminosilicates designed for polymer-clay nanocomposites. Part II: Dispersion in organic solvents and in polystyrene" discloses layered mesostructured silicates and aluminosilicates with covalently attached hexadecyl groups (denoted as C16-LMS, C16-LMAS, and a sample with layers whose thickness was increased by additional silicate, C16-SiO2-LMAS) were investigated as synthetic clays for dispersion and exfoliation in polymer melts. The dispersion of these clays in 13 organic solvents and their performance in polystyrene (PS) nanocomposites were examined. The three synthetic clays dispersed and formed gels in aromatic solvents and in a branched alkyl solvent (2, 6, 10, 14-tetramethylpentadecane, TMPD) based on visual observations and rheology. The elastic moduli (G') of the toluene/clay dispersions for all three clays were similar when compared at equal inorganic content. The synthetic clays were blended with PS samples of various molecular weights. Melt rheology of the PS/clay nanocomposites showed a dramatic increase in elastic modulus compared with neat PS and formation of a G' plateau at low frequencies. The plateau occurred at higher G' values for C16-LMAS than for C16-SiO2-LMAS or C16-LMS, indicating that C16-LMAS has higher strength and/or higher aspect ratio and can thus withstand the stresses of melt mixing. Increasing the molecular weight of PS increased G" of the PS/ C16-LMAS nanocomposites. By small angle X-ray (SAXS) and transmission electron microscopy C16-LMAS showed better dispersion and a higher aspect ratio in the PS-nanocomposite than C16-SiO2-LMAS.

CHASTEKT T ET AL: "Hexadecyl-functionalized lamellar mesostructured silicates and aluminosilicates designed for polymer-clay nanocomposites. Part I. Clay synthesis and structure" discloses motivated by a need for synthetic clays that can be dispersed and exfoliated in polymer melts without added compatibilizers, lamellar mesostructured silicates and aluminosilicates with covalently attached hexadecyl functional groups (C16-LMS and C16-LMAS, respectively) were prepared by sol-gel syntheses and their structures were characterized. Based on XRD and TEM data, lamellar products with layer spacings of 4.8-4.9 nm were obtained between room temperature and 60 °C (C16-LMS) or 70 °C (C16-LMAS). The degree of condensation of the aluminosilicate layers increased at the higher synthesis temperatures. Attachment of organic groups to the inorganic sheets was confirmed by 7°Si solid state MAS NMR and IR spectroscopy. The sheets of C16-LMS consisted of single or double layers of tetrahedral silicate groups, each attached to a hexadecyl chain. C16-LMAS was composed of pyrophyllite-like layers (Si: Al=2) with an octahedral aluminum layer sandwiched between two tetrahedral silicate layers and hexadecyl surface groups. Tetrahedral aluminum sites were also present. The clay layer spacing could be increased to 5.2 nm by addition of tetraethoxysilanes during the synthesis (C16-SiO2-LMAS). C16-SiO2-LMAS was structurally similar to C16-LMAS; however, the presence of additional silicate groups in this structure increased the inorganic layer thickness and introduced further structural disorder.

SUMMARY

The following presents a simplified summary of the disclosure in order to provide a basic understanding of the embodiments. This summary is not an extensive overview of the embodiments. It is not intended to identify key/critical elements of the embodiments or to delineate the scope of the embodiments. The invention is set out in the appended set of claims.

Although embodiments of the present invention are disclosed herein, the disclosed embodiments are merely exemplary and it should be understood that the present embodiments relates to many alternative forms. Furthermore, the figures are not drawn to scale and some features may be exaggerated or minimized to show details of particular features while related elements may have been eliminated. Therefore, specific structural and functional details disclosed herein are not to be interpreted as limiting but merely as a basis for the claims and as a representative basis for enabling someone skilled in the art to employ the present embodiments in a variety of manner. For purposes of instruction and not limitation, the illustrated embodiments are all directed to embodiments of composition(s) and method(s) for hydrophobic coating compositions.

BRIEF DESCRIPTION OF THE DRAWINGS

The embodiments herein will be better understood from the following detailed description with reference to the drawings, in which:

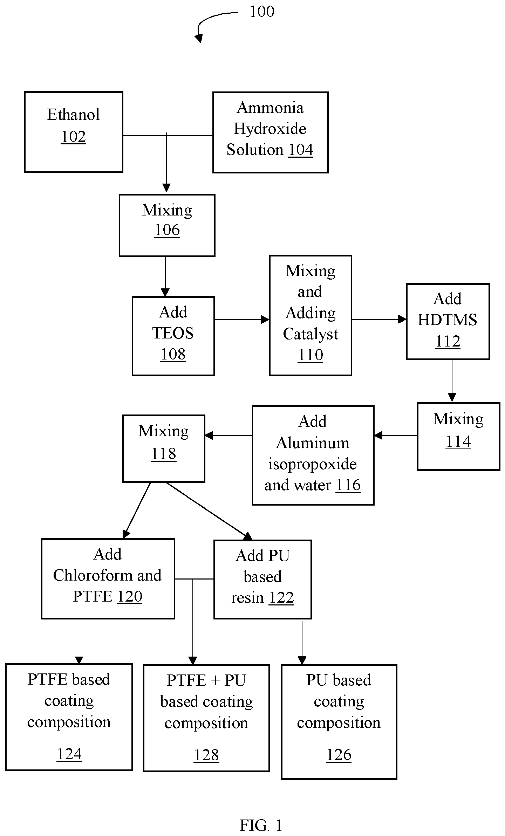

FIG.1 illustrates a flow diagram representing a method for preparation of hydrophobic coating, in accordance with an example embodiment of the present disclosure.

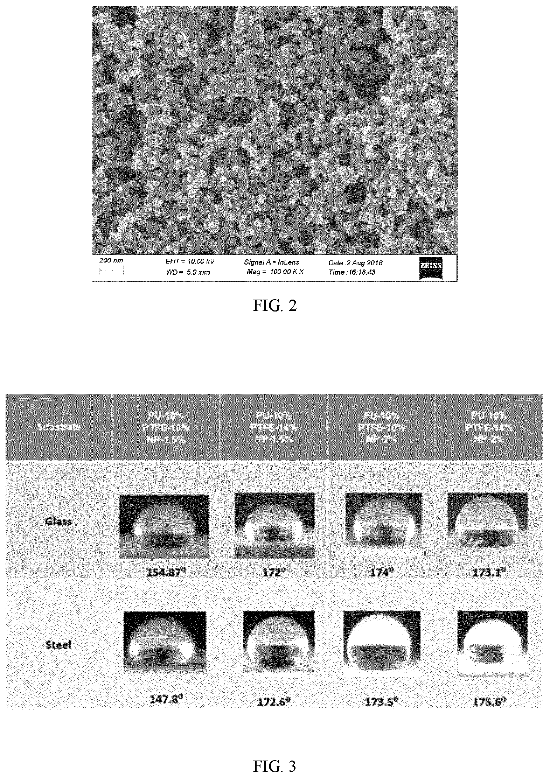

FIG.2 illustrates a SEM (Scanning Electronic Microscope) micrograph of nanoparticles associated with composition and method for preparation of hydrophobic coating, in accordance with an example embodiment of the present disclosure.

FIG. 3 illustrates contact angle on steel and glass substrate using varying percentage concentration of resin and nanoparticle associated with composition and method for preparation of hydrophobic coating, in accordance with an example embodiment of the present disclosure.

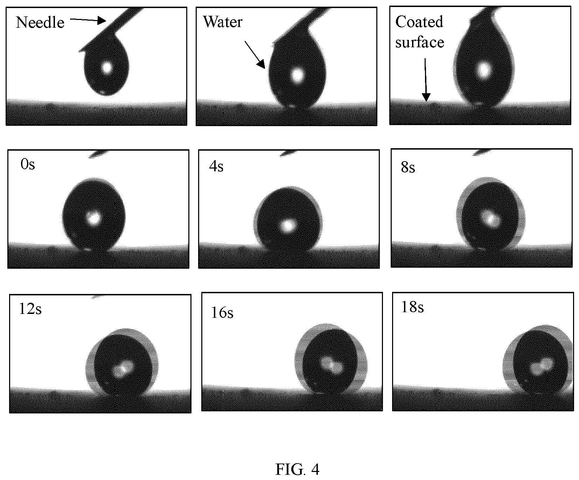

FIG. 4 illustrates sliding angle on steel and glass substrate using varying percentage concentration of resin and nanoparticle associated with composition and method for preparation of hydrophobic coating, in accordance with an example embodiment of the present disclosure.

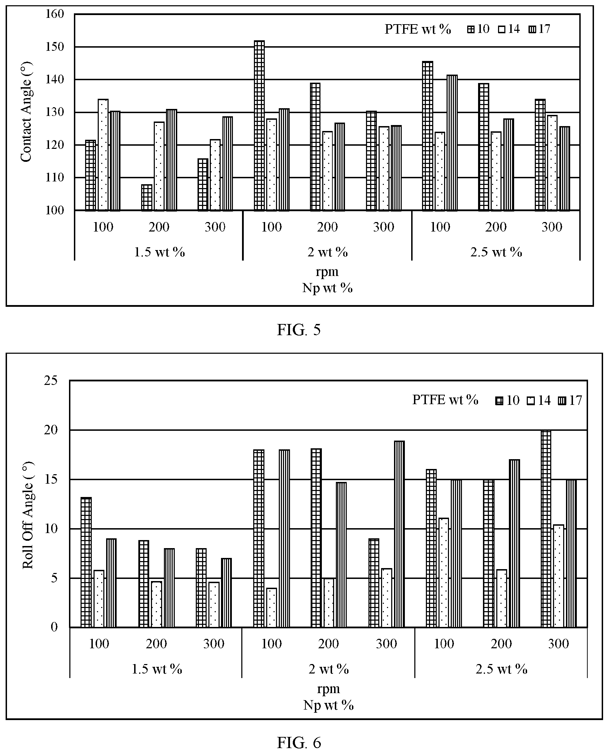

FIG.5 illustrates a graphical representation of effect of rpm (revolutions per minute), varying percentage concentration of resin and nanoparticle on contact angle associated with composition and method for preparation of hydrophobic coating, in accordance with an example embodiment of the present disclosure.

FIG.6 illustrates a graphical representation of effect of rpm (revolutions per minute), varying percentage concentration of resin and nanoparticle on roll of angle associated with composition and method for preparation of hydrophobic coating, in accordance with an example embodiment of the present disclosure.

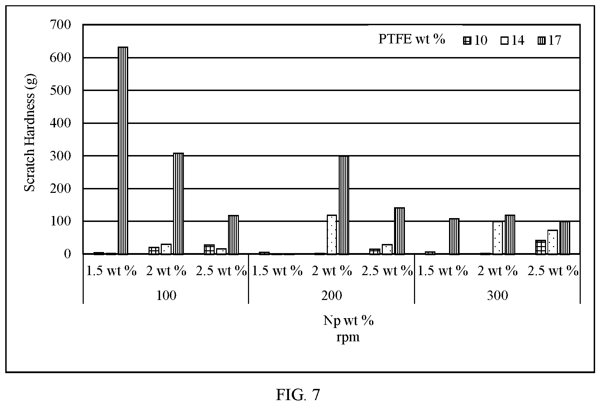

FIG.7 illustrates a graphical representation of effect of rpm (revolutions per minute), varying percentage concentration of resin and nanoparticle on scratch hardness length associated with composition and method for preparation of hydrophobic coating, in accordance with an example embodiment of the present disclosure.

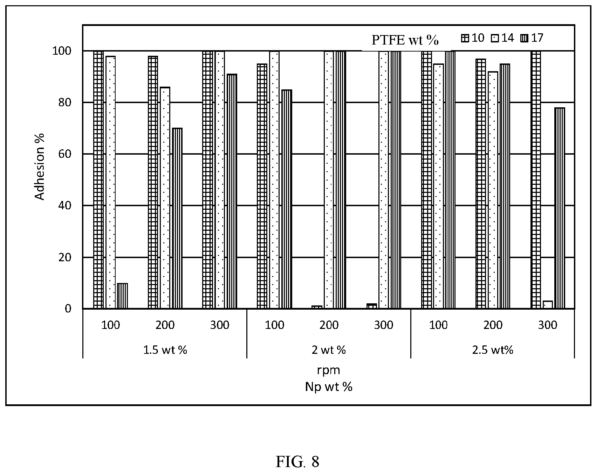

FIG.8 illustrates a graphical representation of effect of rpm (revolutions per minute), varying percentage concentration of resin and nanoparticle on percentage adhesion associated with composition and method for preparation of hydrophobic coating, in accordance with an example embodiment of the present disclosure.

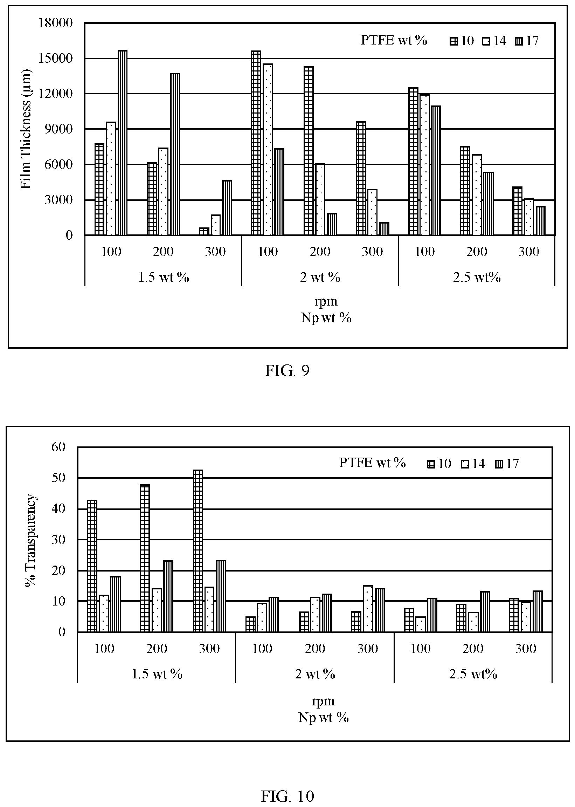

FIG.9 illustrates a graphical representation of effect of rpm (revolutions per minute), varying percentage concentration of resin and nanoparticle on film thickness associated with composition and method for preparation of hydrophobic coating, in accordance with an example embodiment of the present disclosure.

FIG. 10 illustrates a graphical representation of effect of rpm (revolutions per minute), varying percentage concentration of resin and nanoparticle on percentage of transparency associated with composition and method for preparation of hydrophobic coating, in accordance with an example embodiment of the present disclosure.

DETAILED DESCRIPTION

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein. Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

Furthermore, the figures are not drawn to scale and some features may be exaggerated or minimized to show details of particular features while related elements may have been eliminated to prevent obscuring novel aspects. Therefore, specific structural and functional details disclosed herein are not to be interpreted as limiting but merely as a basis for the claims and as a representative basis for enabling someone skilled in the art to employ the present invention in a variety of manner. For purposes of instruction and not limitation, the illustrated embodiments are all directed to embodiments of coating formulations and for coating compositions for producing hydrophobic or super-hydrophobic surfaces and, and to methods or processes for producing such coating composition.

As used herein, the term "about", when used in conjunction with ranges of dimensions of sizes of particles or other physical properties, temperatures or other chemical characteristics, is meant to cover slight variations that may exist in the upper and lower limits of the ranges of dimensions of particles so as to not exclude embodiments where on average most of the dimensions are satisfied but where statistically dimensions may exist outside this region. It is not the intention to exclude embodiments such as these from the present disclosure.

According to an embodiment of the present subject matter, composition(s) and method(s) for synthesis of hydrophobic coating are described. The present disclosure provides one pot process for development of coating formulation. The present method(s)'s reagent concentrations are optimized to provide higher yield of nano composite without losing the functionalities of the coating composition.

As mentioned earlier, there are several nano composite based coating formulations in the art. However, there is a lack of standardized procedure of preparation of the coating formulations with a simple one pot synthesis procedure. Also, the formulations developed in the state of the art are often unstable and thus the coatings produced therefrom are not durable. Especially, bird dropping creates nuisance when automotive vehicles painted with such coatings are parked in open parking. These bird's dropping contains uric acid which is highly corrosive and degrade paint layer on the vehicles because of its acidic nature. Therefore, a coating which does not adhere to these bird's dropping is imperative. The present disclosure provides a method to produce such formulations which are stable and upon coating these coatings have good scratch hardness, transparency, super hydrophobicity, self-cleaning and anti-corrosive properties. In view of the foregoing, the present embodiments provide nano composite based coating formulation. In one of the embodiments an alumina - silica - resin based nano composite is developed in one step by sol gel method.

In general, nano particles are synthesized in different ways, which are broadly classified as Top-Down approach and Bottom-Up approach. The former method involves reducing large scale particles into nano-scale and latter deals with building up of nano-structures from atoms and molecules. The Top-Down approach is slow and costlier compared to Bottom-Up approach. Sol-Gel process, type of Bottom-Up approach has been used in the present embodiments for synthesizing the silica and alumina nano-particles. The Sol-Gel process is a process in which solid particles are dispersed in a liquid (sol) and agglomerate to form continuous three dimensional network extending throughout the liquid (gel). This process involves hydrolysis, condensation, gelation, aging and drying. In the Sol-Gel process, metal alkoxides and metal chlorides are commonly used precursors, which undergo hydrolysis and poly condensation reactions to form a colloid (gel).

In view of the foregoing, one of the embodiments provides nano composite based coating formulation. In said embodiment, an alumina - silica - resin based nano composite is developed in one step by sol gel method in a pot/container. In said embedment, precursors of each element that is silica and alumina are added one by one and upon hydrolysis and condensation, nanoparticles were produced. To increase hydrophobicity, alkyl alkoxy silane based precursor has been added. These are then dispersed in resin, for example, liquid PTFE (Polytetrafluoroethylene). Thus produced formulation is coated on glass and metal surface by simple dip, spray and spin coating process. The coating showed contact angle greater than 150 degree and very low roll off angle for a water droplet as well as corrosion resistance. Presence of alumina rendered good scratch hardness without losing transparency.

The present invention provides a hydrophobic coating composition and a process of making the hydrophobic coating composition.

The hydrophobic coating composition according to the present invention includes a formulation of alumina - silica based nano composite and a resin onto which the formulation is dispersed to form the hydrophobic coating composition. In an example embodiment ratio of the resin and the formulation is in the range of about 10 to 17 wt %. The formulation includes silica nano-particles derived from TetraEthoxySilane (TEOS) as a precursor and HexaDecylTriMethoxySilane (HDTMS) as an organic modifier. In an example, the ratio of HexaDecylTriMethoxySilane and TetraEthoxySilane (TEOS) is in the range of about 0.15 to 0.2. The HDTMS induces hydrophobicity into the nano composite and agglomerate silica particles. The formulation further includes ammonia as catalyst and aluminum iso propoxide as a precursor for synthesis of alumina.

In an example embodiment, the catalyst may be a pH modifier. For example, the catalyst may be one of ammonia and sodium hydroxide. The obtained hybrid nano composite particles are characterized for shape and size by Scanning Electron Microscopy (SEM).

In said one example embodiment, the resin may be one of Polydimethylsiloxane (PDMS), polyethylene (PE), polypropylene (PP), polychloroethene (PVC), polystyrene (PS), acrylonitrile butadiene styrene (ABS), polyamide (PA), polycarbonates (PC), polyphenylene oxide (PPO), polyurethane (PU), polytetrafluoroethylene (PTFE), polybutylene terephthalate (PBT), polyethylene terephthalate (PET), polyacrylate, polyphenylene sulfide (PPS), nylon, and mixtures thereof. The preceding experimental results and the illustrative graphs shows the varying percentage concentration of resin and functionalities of such composition.

In an example embodiment, the precursor for silica may be a silane. The silane as precursor for silica may be one of alkyl, alkoxy silane tetraethyl orthosilicate, methyl triethoxysilane, aminoalkyl and triethoxysilane. The silane as precursor for alumina may be one of aluminum iso propoxide, aluminum isobutoxide, aluminum ethoxide, and aluminum chloride. In another example embodiment, the organic modifier is a silane. The silane as organic modifier may one of alkylsilane, dialkylsilane, polyalkylsilane, organochlorosilane, organodichlorosilane, organopolychlorosilane, and oxalkylsilanes.

The hydrophobic coating composition may be applied on to a surface in form of a powder, spray or paint using one of the coating techniques. For example, coating techniques may be one of simple dip, spray or spin coating process. The hydrophobic coating composition is super hydrophobic with a contact angle of greater than 150 degree and sliding angle in the rage of about 0 to 5 degree. As will be described in the succeeding paragraphs, the effect of rpm (revolutions per minute) of the spin coating is measured and the observations are captured as shown in the experimental results and in the graphical illustrations.

The following describes the methods employing the hydrophobic coating compositions to achieve the above listed characteristics. Those should, however, only be considered examples but not as limiting the scope of disclosed embodiments.

Referring now to FIG. 1, a flow diagram 100 for a method for preparation of hydrophobic coating is illustrated. FIG. 1 shows various steps of preparation of hydrophobic coating composition in a single container/one pot. At step 102 and 104, a mixture of ethanol and ammonia solution was formed by mixing 106 the mixture in a container/pot to form a homogenous solution. At step 108, a predetermined amount of TetraEthoxySilane (TEOS) is added drop wise to the homogenous solution. At step 110, a predetermined amount of catalysts (a pH modified) is added to the homogenous solution in the container and mixed thoroughly. Thereafter at step 112, HexaDecylTriMethoxySilane (HDTMS) is also added drop wise to the homogenous solution to obtain a primary mixture. At step 114, the primary mixture is mixed for a certain period of time. In an example embodiment, the primary mixture is mixed for about 30 minutes and at a rate of about 300 rpm. The primary mixture is then condensed to obtain hydrophobic silica particles.

In an example embodiment, the temperature of the hydrophobic silica particles is maintained at about 50 degree Celsius and for about 60 minutes. Herein, step at 116, aluminum isopropoxide and water is added to the hydrophobic silica particles in the same container to obtain a secondary mixture. At 118, the secondary mixture is mixed by stirring for about 24 hours. Thereafter, at 120 and 122, the secondary mixture is dispersed in one or more resins. The resin used in the present claimed subject matter may include chloroform and PTFE 120 and Polyurethane 122 and to obtain PTFE based coating composition 124 and 126 respectively and a combination of PU and PTFE is prepared to obtain a coating composition of super hydrophobicity (as may inferred from the experimental results herein).

In an alternative embodiment, HDTMS may be added drop wise to alumina-silica mixture and epoxy based coating formulation to render the hydrophobicity to the coated surface. Herein, HDTMS induces hydrophobicity into the nano composite and agglomerate silica particles. The alumina nanoparticles formulation herein is produced by ball milling (by top down approach) and, silica nanoparticles were produced by sol-gel method. Such coating also demonstrates scratch resistant and hydrophobicity. One of the primary advantages of using epoxy-based resin in the coating formulation is that such coated surfaces have good transparency.

In accordance with the present disclosure, various designs of experiments were conducted to arrive at an optimum composition. The design of experiments includes varying the percentage of one or more resins and process parameters of the composition(s) and method(s) of the present embodiments. Thus, one pot synthesis of the hydrophobic coating formulation, in accordance with the present embodiment, gives a higher yield of nano composite without losing the functionalities of the final coating composition by optimizing reagent concentrations. The functionalities of the composition(s), in accordance with the present embodiments are described in the FIG. 2, FIG. 3 and FIG. 4.

Referring now to FIG. 2 illustrating a SEM (Scanning Electronic Microscope) micrograph of nanoparticles associated with a method for preparation of hydrophobic coating, in accordance with an example embodiment of the present disclosure. FIG. 2 shows that particle size achieved is about 41± 10 (standard deviation) nm. The particle size measured by ImageJ software suggests uniform particle size. And, the silica nano particles are in the range of about 20 to 60 nm.

Referring now to FIG. 3 illustrating contact angle of hydrophobic surface, herein namely, steel and glass substrate using varying percentage concentration of resin and nanoparticle, associated with a method for preparation of hydrophobic coating in accordance with an example embodiment of the present disclosure. FIG. 3 shows varying percentage concentration of Polyurethane (PU), Polytetrafluoroethylene (PTFE) and nano-particle composite (Np). The coating composition containing varying percentage was applied on substrates, for example, glass and steel using spin coating process. For each of the hydrophobic coating composition containing varying percentage concentration of PU, PTFE and Np, contact angle is measured. The contact angles for the hydrophobic surfaces for present embodiments ranges from about 147.8 degree to 175.6 degree (As shown in FIG. 3).

Referring to FIG. 4 illustrating sliding angle/roll off angle of hydrophobic surface, herein namely, steel and glass substrate using varying percentage concentration of resin and nanoparticle, associated with a method for preparation of hydrophobic coating in accordance with an example embodiment of the present disclosure. FIG. 4 includes varying percentage concentration of Polyurethane (PU), Polytetrafluoroethylene (PTFE) and nano-particle composite (Np) (Same combination as shown in FIG. 3). The coating composition containing varying percentage was applied on substrates, for example, glass and steel using spin coating process. For each of the hydrophobic coating composition containing varying percentage concentration of PU, PTFE and Np, sliding angle is measured. FIG. 4 shows series of images from a video capturing the behavior of the water droplet on the hydrophobic coating, in accordance with the present embodiments. The series of images are time stamped, for example, images taken at 0, 4, 8, 12, 16 and 18 to show the sliding angle of the water drop let on the surface. The sliding angle ranges from about 0 to 5 degree.

In one embodiment, the hydrophobic coating composition prepared through the methods described herein is a one pot (one container) by sol gel method. In general, when nanoparticles are produced in two different medium separately, they often don't mix properly and suspension become unstable and phase separates.

The one pot synthesis as described in the present embodiments leads to formation of nanoparticles at same condition such as pH, ionic strength which are more compatible with each other and hence stable. The compositions and the methods of the present embodiments are further validated with the experimental results in the succeeding paragraphs.

The one pot process of the hydrophobic coating formulation, in accordance with the present embodiment, gives a higher yield of nano composite without losing the functionalities of the final coating composition by optimizing reagent concentrations. The hydrophobic coating composition, in accordance with the present embodiment is a single pot synthesis which gives good adhesion without changing the texture of surface (substrate) on which it is applied. For example, the produced formulation is coated on any substrate like glass and metal surface using one of simple dip, spray and spin coating process. The coating showed contact angle greater than 150 degree and very low roll off angle for a water droplet as well as corrosion resistance. Also, presence of alumina in the nano composite renders good scratch hardness without losing transparency.

EXPERIMENTAL RESULTS

The results of methods for preparation of hydrophobic coating have been validated using following examples. It will be understood that the examples discussed herein are only for the purpose of explanation and not to limit the scope of the present subject matter. Further, the test results are shown for a specific example of hydrophobic coating and should in no way be construed as the only stable hydrophobic coating that can be formed through the described method.

In an embodiment, silica nano-particles was prepared based on Stober method using TetraEthoxySilane (TEOS) as the starting material in a single pot/container. The Stober method was used to prepare monodispersed silica particles using sol-gel process. Silica particles with a diameter of about 100 nm to a few $\mu m$ were prepared by using the Stober method. In said embodiment, alumina nano-particles were synthesized using aluminum iso propoxide as the precursor in sol-gel process. In the present embodiment, synthesis of silica-alumina nano-particles was carried out using TetraEthoxySilane (TEOS) and HexaDecylTriMethoxySilane (HDTMS) as the precursors. Thereafter, ammonia was added as catalyst followed by addition of aluminum propoxide and stirred for 24 hours. In said embodiment, silica nano-particles were derived from TetraEthoxySilane (TEOS) precursor with HexaDecylTriMethoxySilane (HDTMS) as organic modifier. Herein, the HDTMS induces hydrophobicity by reducing the surface free energy of nanoparticle surface and also acts a bonding agent between silica particles and glass substrate.

In said embodiment, 75 ml of Ethanol was mixed in a container with 4.5 ml of ammonium hydroxide solution to obtain a homogeneous solution with magnetic stirring for 30 minutes at 50°C. Thereafter, 4.5 ml of TetraEthoxySilane (TEOS) was added to the homogeneous solution drop wise with constant stirring at the same temperature for 2 hours. To the homogenous solution catalyst, namely ammonia, was added with continuous mixing. Thereafter, 0.5% of HexaDecylTriMethoxySilane (HDTMS) was added drop wise with continuous stirring. The mixture was further stirred for about 2 hours at the same temperature to form a hydrophobic silica nano particles. To the nano particles, 0.5316 gm of aluminum isopropoxide and 0.093 ml of distilled water was added and further stirred for 24 hrs. In order to disperse in the desired resin (example: PTFE, PU or PDMS) required quantity of formulation was added to the resin along with chloroform or a suitable diluent.

The formulation was used in coating on various surface such as glass, stainless steel, martensitic steel and the like. The formulation was applied using dip coating, spray coating and spin coating process were used to coat the substrate uniformly. The hydrophobic coatings formed using the aforementioned experiments were characterized using different equipment to measure. The experiments were conducted for varying concentration of PTFE, Np (nano-particle) for different rpm (of spin coating). The PTFE wt% are 10, 14 and 17wt%, The Np% are 1, 1.5 and 2 wt% and the rpm are 100, 200 and 300. Following characteristic of hydrophobic coating was measured as per ASTM, ISO standards, namely,

1) Contact angle,

2) Roll of angle,

3) **Scratch** resistance,

4) Adhesion,

5) Surface Thickness, and

6) Transparency

Contact angle: The contact angle is one important value that reveals if the surface is hydrophobic or hydrophilic or super hydrophobic. For example, if the contact angle is > 90 degree then the coated surface is termed as hydrophobic, if the contact angle is > 150 degree then the coated surface is super-hydrophobic. The contact angle is conventionally measured at a liquid-vapor interface on a solid surface. In general, the contact angle is measured using Goniometer equipment. In the present example, Nikon® Camera was used to capture the 10μl distilled water droplet on the surface coated with the formulation of the present example. The contact angle was measured in ImageJ software and it was observed that measurement made in here resulted in values similar to those obtained using Goniometer.

In an example embodiment commercial PTFE, PU, PDMS are used as combination of one or more resins for dispersing the formulation. The commercial PTFE, PU, PDMS exhibited contact angles of 109.23°, 99.86°, 118.46° respectively. However coating composition, in accordance with the present embodiment provides contact angles more than 150 and hence are super hydrophobic (As shown in FIG. 5).

Referring now to FIG. 5 illustrating a graphical representation of effect of rpm (revolutions per minute), varying percentage concentration of resin and nanoparticle on contact angle associated with composition and method for preparation of hydrophobic coating, in accordance with an example embodiment of the present disclosure. FIG. 5 shows the contact angles are in the range of 140 to 147 degree suggesting hydrophobic coating. The hydrophobicity is induced due to the presence of nano-particles on the surface. It may be inferred from FIG. 5, that with increase in nano-particle concentration, the contact angle is increasing clearly showing nano-particles are the major factors to induce hydrophobicity. On the other hand, the effect of PTFE on contact angle may not be clearly deduced.

Roll of angle/sliding angle: The roll of angle is defined as an angle at which water droplet starts sliding down the surface. Roll of angle is lesser if the droplet sits on the roughness pillars and in absence of air between droplet and surface. In the present example, to measure roll of angle, 10μl distilled water droplet was used at different parts on the slide. In a preferred embodiment commercial PTFE, PU, PDMS were used as resin. The commercial PTFE, PU, PDMS exhibited sliding angles of 16 to 90 depending upon the substrate. The hydrophobic coating formulation, in accordance with the present embodiment, provides sliding angles less than 5 and zero in some cases. In general, lower sliding angle is desirable for self-cleaning, anti-fouling and anti-corrosion properties.

Referring now to FIG.6 illustrating a graphical representation of effect of rpm (revolutions per minute), varying percentage concentration of resin and nanoparticle on roll of angle associated with a method for preparation of hydrophobic coating, in accordance with an example embodiment of the present disclosure. FIG. 6 shows that 1.5 wt. % of nano-particles have lesser roll of angle when compared to other concentrations. Low roll of angle is observed when the droplet is suspended on top of roughness (pillars) or hierarchical microstructure created by nanoparticles. As shown in FIG. 6 the effect of PTFE %, Np % (Nano-particle) and rpm in spin coating on roll off angle ranges from 4 to 20 degree.

Scratch resistance: In general the scratch resistance (hardness) measures the resistance of materials to permanent or plastic deformation. Scratch hardness test measures the hardness of a material to scratches and abrasion due to friction from a sharp object. Carbide indenter was used to scratch the coatings at different loads and the scratch lengths were measured using

$$\text{Hardness formula} = \text{scratch length} \times \text{load}$$

Herein, the addition of alumina nanoparticles to the coating composition helps in scratch resistant. Due to this, the length and load at which coating fails is increased. Referring now to FIG.7 illustrating a graphical representation of effect of rpm (revolutions per minute), varying percentage concentration of resin and nanoparticle on scratch hardness length associated with composition and method for preparation of hydrophobic coating, in accordance with an example embodiment of the present disclosure. FIG. 7 shows that 2 wt. % nano-particle concentration was used as it offers better scratch hardness compared to other wt. %. It may be inferred from the graphical presentation of effect of rpm, nanoparticle concentration and PTFE % on scratch hardness length that 17 wt. % of PTFE offers better scratch hardness than 10 wt. % and 14 wt. %. It is observed that the substrate coated with the hydrophobic coating composition has a scratch hardness more than 600 g of scratch load.

Adhesion: Adhesion of coatings was measured using ASTM D 3359 tape test. This is a standard test for measuring adhesion of coatings using tape test. The test assesses the adhesion of film coatings to metallic substrates by applying and removing pressure-sensitive tape over cuts made in the film. The test method is also known as the "Cross Hatch test". In this test, cross cuts were made and the tape was applied to the coated substrate and removed. The appearance of surface of cross-cut area from which flaking has occurred was analyzed to enumerate the percentage of adhesion.

Referring now to FIG.8 illustrating a graphical representation of effect of rpm (revolutions per minute), varying percentage concentration of resin and nanoparticle on percentage adhesion associated with composition and method for preparation of hydrophobic coating, in accordance with an example embodiment of the present disclosure. FIG. 8 shows that adhesion and transparency was maintained even after addition of nanoparticles and the substrate coated with the hydrophobic coating composition has adhesion as high as 5B or 100 %. FIG. 8 shows that the effect of rpm, nanoparticle concentration and PTFE % on % adhesion, and it may be observed that with increase in rpm, the adhesion also increases.

Film Thickness: Stylus profilometer was used to measure the film thickness. During measurement, a diamond-tipped stylus directly contacts the surface and follows height variations as the sample was moved. The height variations were converted into electrical signals, producing a profile. The resulting trace represents a cross-sectional view with high vertical and spatial resolution. The stylus traces the irregularities on the surface.

Referring now to FIG. 9 illustrating a graphical representation of effect of rpm (revolutions per minute), varying percentage concentration of resin and nanoparticle on film thickness associated with composition and method for preparation of hydrophobic coating, in accordance with an example embodiment of the present disclosure. FIG. 9 shows that the primary reason for increase in adhesion is due to reduction in the thickness. Therefore, due to less thickness, less internal stresses exist between the coating and substrate surface leading to better adhesion. Thus, FIG. 8 and FIG. 9 evidently indicate correlation between thickness and adhesion of coatings.

Transparency: Transparency of the coatings was measured using UV-VIS spectrometer. In a preferred embodiment, transmittance was measured between 800-400 nm wavelength and 1 nm wide slit. Transmittance was calculated by integrating the absorbance values.

Referring now to FIG. 10 illustrating a graphical representation of effect of rpm (revolutions per minute), varying percentage concentration of resin and nanoparticle on percentage of transparency associated with composition and method for preparation of hydrophobic coating, in accordance with an example embodiment of the present disclosure. FIG. 10 shows that all the coated samples showed relatively poor transparency, nevertheless. The loss in transparency can be attributed to presence of PTFE. Herein, the coated surfaces are characterized for transparency, to study the effect of composition on transparency.

Thus, the present subject matter provides hydrophobic coatings which have the characteristics and functionalities of a super hydrophobic composition. The present disclosure provides a procedure to produce such formulations which are stable and upon coating these coatings have good scratch hardness, transparency, super hydrophobicity, self-cleaning and anti-corrosive properties. As shown in the experimental results the hydrophobic coating composition shows super hydrophobicity characteristics which is ideal for many applications in the industries.

The written description describes the subject matter herein to enable any person skilled in the art to make and use the embodiments.

Although implementations for preparation of nanoparticles has been described in language specific to structural features and/or methods, it is to be understood that the appended claims are not necessarily limited to the specific features or methods described. Rather, the specific features and methods are disclosed as examples and implementations for synthesis of nanoparticles. The order in which the method(s) are described is not intended to be construed as a limitation.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

The foregoing description of the preferred embodiments of the invention has been presented to illustrate the principles of the invention and not to limit the invention to the particular embodiments illustrated. It is intended that the scope of the invention be defined by all of the embodiments encompassed within the following claims.

**Claims**

1. A hydrophobic coating composition comprising:

    a formulation of alumina- silica based nano composite, the formulation comprising:

        silica nano-particles derived from Tetra-EthoxySilane (TEOS) as a precursor for silica and HexaDecylTriMethoxySilane (HDTMS) as an organic modifier, wherein ratio of TEOS and HDTMS is in the range of about 0.15 to 0.2,
        aluminum iso propoxide as a precursor for alumina,
        ammonia as a catalyst, wherein the catalyst is a pH modifier; and

    one or more resin onto which the formulation is dispersed to form the hydrophobic coating composition, wherein ratio of the resin and the formulation is in the range of about 10 to 17 wt %.

2. The composition of claim 1, wherein size of the silica nano particles is in the range of about 20 to 60 nm, wherein the size of the silica nano particles is determined by using a Scanning Electron Microscopy (SEM) technique and an imageJ software.

3. The composition of claim 1, wherein the one or more resin is selected from a group consisting of Polydimethylsiloxane (PDMS), polyethylene (PE), polypropylene (PP), polychloroethene (PVC), polystyrene (PS), acrylonitrile butadiene styrene (ABS), polyamide (PA), polycarbonates (PC), polyphenylene oxide (PPO), polyurethane (PU), polytetrafluoroethylene (PTFE), polybutylene terephthalate (PBT), polyethylene terephthalate (PET), polyacrylate, polyphenylene sulfide (PPS), nylon, and combination thereof.

4. The composition of claim 1, wherein a substrate coated with the hydrophobic coating composition is a super hydrophobic coating having a contact angle of about 147 - 175 degree, wherein the contact angle is measured at a liquid-vapor interface on a solid surface using an imageJ software upon a camera capturing distilled water droplet on the substrate coated with the formulation.

5. The composition of claim 1, wherein a substrate coated with the hydrophobic coating composition has a sliding angle in the range of about 0 - 5 degree, wherein the sliding angle is defined as an angle at which water droplet starts sliding down the surface, and wherein the sliding angle is measured using distilled water droplet at different parts on the slide.

6. The composition of claim 1, wherein a substrate coated with the hydrophobic coating composition has adhesion of 100 %, wherein the adhesion is measured using a tape test, and wherein the tape test assesses the adhesion of the hydrophobic coating to the substrate by applying and removing pressure-sensitive tape over cross cuts made in the film.

7. The composition of claim 1, wherein a substrate coated with the hydrophobic coating composition has a scratch hardness greater than 600 g of scratch load, wherein the scratch hardness is measured by scratching the hydrophobic coating at different loads and measuring scratch hardness lengths at the different scratch loads.

8. A hydrophobic coating formed using the hydrophobic coating composition of claim 1 prepared by a method comprising:

    mixing ethanol and ammonium hydroxide solution for about 30 minutes at a rate of about 300 rpm and at about a temperature of 50 degree Celsius to obtain a homogenous solution, wherein the mixing is performed by a bottom up sol-gel method of synthesis in a single container;
    adding drop wise, TetraeEthoxySilane (TEOS) to the homogenous solution followed by addition a catalyst, with continuous stirring at a temperature of about 50 degree Celsius for a time period of about 60 minutes to obtain a primary mixture;
    adding drop wise, HexaDecylTrimEthoxySilane (HDTMS) to the primary mixture with continuous stirring at a temperature of about 50 degree Celsius for a time period of about 60 minutes to obtain a secondary mixture, wherein ratio of TEOS and HDTMS is in the range of about 0.15 to 0.2;
    stirring the secondary mixture for a time period of about 60 minutes at a temperature of about 50 degree Celsius and condensing the secondary mixture to obtain silica nanoparticles formulation;
    adding aluminum iso propoxide and distilled water to the silica nano particles formulation and stirring for about 24 hours; and
dispersing the silica nano particles formulation
in one or more resins to obtain the hydrophobic
coating formulation, wherein ratio of the resins
and the hydrophobic coating formulation is in the
range of about 10 to 17 wt %..

**Patentansprüche**

1. Hydrophobe Beschichtungszusammensetzung, umfassend:

   eine Formulierung von Nanoverbundstoff auf Basis von Aluminiumoxid und Siliciumdioxid, wobei die Formulierung Folgendes umfasst:

   Siliciumdioxid-Nanopartikel, die von Tetraethoxysilan (TEOS) als einem Vorläufer für Siliciumdioxid und Hexadecyltrimethoxysilan (HDTMS) als einem organischen Modifizierungsmittel abgeleitet sind, wobei das Verhältnis von TEOS und HDTMS im Bereich von etwa 0,15 bis 0,2 liegt, Aluminiumisopropoxid als einem Vorläufer für Aluminiumoxid, Ammoniak als einem Katalysator, wobei der Katalysator ein pH-Modifizierungsmittel ist; und

   ein oder mehrere Harze, auf denen die Formulierung dispergiert ist, um die hydrophobe Beschichtungszusammensetzung zu bilden, wobei das Verhältnis des Harzes und der Formulierung im Bereich von etwa 10 bis 17 Gew.-% liegt.

2. Zusammensetzung nach Anspruch 1, wobei die Größe der Siliciumdioxid-Nanopartikel im Bereich von etwa 20 bis 60 nm liegt, wobei die Größe der Siliciumdioxid-Nanopartikel unter Verwendung einer Rasterelektronenmikroskopie (REM)-Technik und einer imageJ-Software bestimmt wird.

3. Zusammensetzung nach Anspruch 1, wobei das eine oder die mehreren Harze aus einer Gruppe ausgewählt sind, die aus Polydimethylsiloxan (PDMS), Polyethylen (PE), Polypropylen (PP), Polychlorethen (PVC), Polystyrol (PS), Acrylnitril-Butadien-Styrol (ABS), Polyamid (PA), Polycarbonaten (PC), Polyphenylenoxid (PPO), Polyurethan (PU), Polytetrafluorethylen (PTFE), Polybutylenterephthalat (PBT), Polyethylenterephthalat (PET), Polyacrylat, Polyphenylensulfid (PPS), Nylon und einer Kombination davon besteht.

4. Zusammensetzung nach Anspruch 1, wobei ein Substrat, das mit der hydrophoben Beschichtungszusammensetzung beschichtet ist, eine superhydrophobe Beschichtung mit einem Kontaktwinkel von etwa 147 - 175 Grad ist, wobei der Kontaktwinkel an einer Flüssigkeit-Dampf-Grenzfläche auf einer festen Oberfläche unter Verwendung einer imageJ-Software auf einer Kamera, die destilliertes Wassertröpfchen auf dem mit der Formulierung beschichteten Substrat erfasst, gemessen wird.

5. Zusammensetzung nach Anspruch 1, wobei ein Substrat, das mit der hydrophoben Beschichtungszusammensetzung beschichtet ist, einen Gleitwinkel im Bereich von etwa 0 - 5 Grad aufweist, wobei der Gleitwinkel als ein Winkel definiert ist, bei dem Wassertröpfchen beginnen, die Oberfläche herunterzugleiten, und wobei der Gleitwinkel unter Verwendung von destilliertem Wassertröpfchen an verschiedenen Teilen auf dem Objektträger gemessen wird.

6. Zusammensetzung nach Anspruch 1, wobei ein Substrat, das mit der hydrophoben Beschichtungszusammensetzung beschichtet ist, eine Haftung von 100 % aufweist, wobei die Haftung unter Verwendung eines Bandtests gemessen wird und wobei der Bandtest die Haftung der hydrophoben Beschichtung auf dem Substrat durch Aufbringen und Entfernen von druckempfindlichem Band über in der Folie hergestellte Querschnitte beurteilt.

7. Zusammensetzung nach Anspruch 1, wobei ein Substrat, das mit der hydrophoben Beschichtungszusammensetzung beschichtet ist, eine Kratzhärte von mehr als 600 g Kratzlast aufweist, wobei die Kratzhärte durch Zerkratzen der hydrophoben Beschichtung bei verschiedenen Lasten und Messen von Kratzhärtelängen bei den verschiedenen Kratzlasten gemessen wird.

8. Hydrophobe Beschichtung, gebildet unter Verwendung der hydrophoben Beschichtungszusammensetzung nach Anspruch 1, hergestellt durch ein Verfahren, umfassend:

   Mischen von Ethanol und Ammoniumhydroxidlösung für etwa 30 Minuten mit einer Geschwindigkeit von etwa 300 U/min und bei etwa einer Temperatur von 50 Grad Celsius, um eine homogene Lösung zu erhalten, wobei das Mischen durch ein Bottom-up-Sol-Gel-Syntheseverfahren in einem einzigen Behälter durchgeführt wird; tropfenweises Zugeben von Tetraethoxysilan (TEOS) zu der homogenen Lösung, gefolgt von der Zugabe eines Katalysators, unter kontinuierlichem Rühren bei einer Temperatur von etwa 50 Grad Celsius für einen Zeitraum von etwa 60 Minuten, um eine primäre Mischung zu erhalten;

tropfenweises Zugeben von Hexadecyltrimethoxysilan (HDTMS) zu der primären Mischung unter kontinuierlichem Rühren bei einer Temperatur von etwa 50 Grad Celsius für einen Zeitraum von etwa 60 Minuten, um eine sekundäre Mischung zu erhalten, wobei das Verhältnis von TEOS und HDTMS im Bereich von etwa 0,15 bis 0,2 liegt;

Rühren der sekundären Mischung für einen Zeitraum von etwa 60 Minuten bei einer Temperatur von etwa 50 Grad Celsius und Kondensieren der sekundären Mischung, um eine Siliciumdioxid-Nanopartikelformulierung zu erhalten;

Zugeben von Aluminiumisopropoxid und destilliertem Wasser zu der Siliciumdioxid-Nanopartikelformulierung und Rühren für etwa 24 Stunden; und

Dispergieren der Siliciumdioxid-Nanopartikelformulierung in einem oder mehreren Harzen, um die hydrophobe Beschichtungsformulierung zu erhalten, wobei das Verhältnis der Harze und der hydrophoben Beschichtungsformulierung im Bereich von etwa 10 bis 17 Gew.-% liegt.

**Revendications**

1.  Composition de revêtement hydrophobe comprenant :

    une formulation de nanocomposite à base d'alumine-silice, la formulation comprenant :

    des nanoparticules de silice dérivées de tétraéthoxysilane (TEOS) en tant que précurseur pour la silice et d'hexadécyltriméthylsilane (HDTMS) en tant que modificateur organique, dans laquelle le rapport du TEOS et du HDTMS est compris dans une plage d'environ 0,15 à 0,2,
    de l'isopropoxyde d'aluminium en tant que précurseur pour l'alumine,
    de l'ammoniac en tant que catalyseur, dans laquelle le catalyseur est un modificateur de pH ; et

    une ou plusieurs résines dans lesquelles la formulation est dispersée pour former la composition de revêtement hydrophobe, dans laquelle le rapport entre la résine et la formulation est compris dans une plage d'environ 10 à 17 % en poids.

2.  Composition selon la revendication 1, dans laquelle la taille des nanoparticules de silice est comprise entre environ 20 à 60 nm, dans laquelle la taille des nanoparticules de silice est déterminée en utilisant une technique de microscopie électronique à balayage (SEM) et un logiciel imageJ.

3.  Composition selon la revendication 1, dans laquelle la ou les résines sont choisies parmi un groupe comprenant le polydiméthylsiloxane (PDMS), le polyéthylène (PE), le polypropylène (PP), le polychloroéthène (PVC), le polystyrène (PS), l'acrylonitrile butadiène styrène (ABS), le polyamide (PA), les polycarbonates (PC), l'oxyde de polyphénylène (PPO), le polyuréthane (PU), le polytétrafluoroéthylène (PTFE), le polybutylène téréphtalate (PBT), le polyéthylène téréphtalate (PET), le polyacrylate, le sulfure de polyphénylène (PPS), le nylon, et une combinaison de ceux-ci.

4.  Composition selon la revendication 1, dans laquelle un substrat revêtu avec la composition de revêtement hydrophobe est un revêtement super hydrophobe ayant un angle de contact d'environ 147 à 175 degrés, dans laquelle l'angle de contact est mesuré au niveau d'une interface liquide-vapeur sur une surface solide en utilisant un logiciel imageJ après la capture d'une goutte d'eau distillée sur le substrat revêtu avec la formulation.

5.  Composition selon la revendication 1, dans laquelle un substrat revêtu avec la composition de revêtement hydrophobe présente un angle de glissement compris un environ 0 à 5 degrés, dans laquelle l'angle de glissement est défini comme un angle auquel une goutte d'eau commence à glisser le long de la surface, et dans laquelle l'angle de glissement est mesuré en utilisant une goutte d'eau distillée à différents endroits de la surface.

6.  Composition selon la revendication 1, dans laquelle un substrat revêtu avec la composition de revêtement hydrophobe présente une adhérence de 100 %, dans laquelle l'adhérence est mesurée en utilisant un test de ruban, et dans laquelle le test de ruban évalue l'adhérence du revêtement hydrophobe au substrat en appliquant et en retirant un ruban sensible à la pression sur des entailles croisées faites dans le film.

7.  Composition selon la revendication 1, dans laquelle un substrat revêtu avec la composition de revêtement hydrophobe présente une dureté au rayage supérieure à 600 g de charge de rayure, dans laquelle la dureté au rayage est mesurée en rayant le revêtement hydrophobe à différentes charges et en mesurant les longueurs de dureté au rayage à différentes charges de rayure.

8.  Revêtement hydrophobe formé en utilisant la composition de revêtement hydrophobe selon la revendication 1 préparée par un procédé comprenant :

le mélange d'éthanol et d'une solution d'hydroxyde d'ammonium pendant environ 30 minutes à une vitesse d'environ 300 tr/min et à une température d'environ 50 degrés Celsius pour obtenir une solution homogène, dans lequel le mélange est réalisé par un procédé de synthèse sol-gel ascendant dans un récipient unique ;

l'ajout goutte à goutte de tétraéthoxysilane (TEOS) à la solution homogène suivi par l'ajout d'un catalyseur, avec une agitation continue à une température d'environ 50 degrés Celsius pendant une période d'environ 60 minutes pour obtenir un mélange primaire ;

l'ajout goutte à goutte d'hexadécyltriméthylsilane (HDTMS) au mélange primaire avec une agitation continue à une température d'environ 50 degrés Celsius pendant une période d'environ 60 minutes pour obtenir un mélange secondaire, dans lequel le rapport du TEOS et du HDTMS est compris entre environ 0,15 à 0,2 ;

l'agitation du mélange secondaire pendant une période d'environ 60 minutes à une température d'environ 50 degrés Celsius et la condensation du mélange secondaire pour obtenir une formulation de nanoparticules de silice ;

l'ajout d'isopropoxyde d'aluminium et d'eau distillée à la formulation de nanoparticules de silice et l'agitation pendant environ 24 heures ; et

la dispersion de la formulation de nanoparticules de silice dans une ou plusieurs résines pour obtenir la formulation de revêtement hydrophobe, dans lequel le rapport entre les résines et la formulation de revêtement hydrophobe est compris dans une plage d'environ 10 à 17 % en poids.

100

FIG. 1

FIG. 2

FIG. 3

FIG. 4

FIG. 5

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201921010010

- CN 108659581 A

**Non-patent literature cited in the description**

- **CHASTEKTT et al.** Part II: Dispersion in organic solvents and in polystyrene. *Hexadecyl-functionalized lamellar mesostructured silicates and aluminosilicates designed for polymer-clay nanocomposites.*

- **CHASTEKT T et al.** Part I. Clay synthesis and structure. *Hexadecyl-functionalized lamellar mesostructured silicates and aluminosilicates designed for polymer-clay nanocomposites.*